# EUROPÄISCHE PATENTSCHRIFT

(11) **EP 2 832 562 B1**
(45) Veröffentlichungstag und Bekanntmachung des Hinweises auf die Patenterteilung: **18.11.2015**
(21) Anmeldenummer: 13003809.4
(22) Anmeldetag: 31.07.2013
(51) Int. Cl.: B60D 5/00, B64F 1/305, B64F 1/315

(54) **Fluggastbrücke oder -treppe**
Air passenger boarding bridge or escalator
Passerelle ou escalier d'embarquement

(43) Veröffentlichungstag der Anmeldung: 04.02.2015
(73) Patentinhaber: Hübner GmbH & Co. KG, 34123 Kassel (DE)
(72) Erfinder: Fülling, Jürgen, 34388 Trendelburg (DE); Schuster, Heinz, 34123 Kassel (DE)
(74) Vertreter: Walther, Walther & Hinz GbR

(56) Entgegenhaltungen:
- EP-A1- 2 463 199
- US-A- 5 267 368

## Beschreibung

Die Erfindung betrifft eine Fluggastbrücke oder -treppe mit einem stirnseitigen Übergang, wobei der Übergang einen Balg mit stirnseitigem Bumper und einen Boden umfasst, wobei der Balg eine Mehrzahl von Balgelementen aufweist, wobei der Übergang im Bereich des Bodens mindestens eine Führungsstange zur längsverschieblichen Führung mehrerer Balgelemente aufweist.

Eine Fluggasttreppe oder auch eine Fluggastbrücke sind aus dem Stand der Technik hinreichend bekannt. Sowohl die Fluggastbrücke als auch die Fluggasttreppe weisen an ihrem stirnseitigen Ende einen Übergang mit einem Balg und einem von dem Balg überspannten Boden auf, der es den Fluggästen ermöglicht, ohne der Witterung ausgesetzt zu werden, von der z. B. Fluggastbrücke in das Flugzeug zu gelangen. Der Balg des Übergangs weist am freien stirnseitigen Ende einen Bumper auf, wobei ein Bumper sich als ein entsprechend der Form des Balges umlaufendes Kissen darstellt, wobei dieses Kissen auf einem biegsamen Rahmen, z. B. aus Metall, angeordnet ist, der seinerseits stirnseitig an dem Balg befestigt ist. Entsprechend der Kontur des Flugzeugs im Bereich des Einstiegs verformt sich sowohl der Bumper als auch der Balg, um einen zum Flugzeugrumpf dichten Abschluss zu gewährleisten. Der Grad der Auslenkung des Bumpers im Dachbereich des Einstiegs eines Flugzeugs kann hier signifikant größer sein als im Bodenbereich.

Eine solche Fluggasttreppe oder Fluggastbrücke ist in der EP 2 463 199 A1 offenbart.

Nun ist bekannt, dass der Balg im Bodenbereich der Seitenwände zu beiden Seiten durch eine Führungsstange geführt ist. Die Führungsstange ist mit ihrem einen hinteren Ende am Rahmen der Fluggastbrücke oder - treppe befestigt, und weist im vorderen Endbereich, also dem Bereich, der dem Bumper zugerichtet ist, eine rechtwinklige Abkantung zum Boden des Übergangs zu auf. Die Führungsstange ist mit dem Boden üblicherweise auch physisch verbunden. Der Balg ist normalerweise als Faltenbalg ausgebildet, wobei ein solcher Faltenbalg an den Faltenkanten umlaufende Balgrahmen zur Stabilisierung des Balges aufweist. Im Bereich der Führungsstange sind die Balgrahmen mit Ösen versehen, mit denen die einzelnen Balgelemente in Form der Falten bei einem Faltenbalg, verschieblich auf der Führungsstange gelagert sind.

Es wurde bereits darauf hingewiesen, dass der Balg im Dachbereich entsprechend der Kontur des Flugzeuges gegenüber dem Bodenbereich unter Umständen sehr weit ausgestellt wird. Das heißt, der Balg steht im Frontbereich somit im Bereich des Bumpers unter einer erheblichen Spannung. Hierbei werden die Ösen und damit auch die Balgrahmen gegen das vertikal verlaufende Ende der Führungsstange gedrückt, was bei mehrmaligem Gebrauch dazu führt, dass entweder der Balgrahmen Schaden nimmt, und zwar in dem Sinne, dass in diesem Bereich die Stoffbahn des Balges aus dem Balgrahmen herausreißt, oder aber, dass die Ösen von dem Balgrahmen abreißen.

Die der Erfindung zugrunde liegende Aufgabe besteht demzufolge darin auch bei einer weiten Ausstellung des Balgdaches gegenüber dem Bodenbereich des Balges dafür zu sorgen, dass der Balg hierbei keinen Schaden nimmt.

Zur Lösung der Aufgabe wird erfindungsgemäß vorgeschlagen, dass die Führungsstange im Bereich des Bumpers bogenförmig in Richtung auf den Boden zu abgewinkelt ist. Durch einen solchen bogenförmigen aber nicht abgekanteten Verlauf der Führungsstange im Bereich des bumperseitigen Endes des Balges wird erreicht, dass die Balgelemente im Bodenbereich der Kontur der Führungsstange im Bereich der Biegung folgen können. Die Folge hiervon ist, dass der Balg bzw. die einzelnen Balgelemente in diesem Bereich keinerlei Widerstand erfahren, der zu einer Beschädigung oder gar Zerstörung des Balges bzw. der Balgelemente führen könnte.

Vorteilhafte Merkmale und Ausgestaltungen der Erfindung ergeben sich aus den Unteransprüchen.

So ist insbesondere vorgesehen, dass die Führungsstange um einen Winkel zwischen 30° und 180°, vorzugsweise um einen Winkel von ca. 90° abgebogen ist. Wesentlich hierbei ist, dass der Verlauf der Führungsstange bogenförmig in Richtung des Bodens ausgebildet ist, um der Bewegung des Balges bei der Ausstellbewegung einerseits nachgeben zu können, aber gleichzeitig andererseits dennoch den Balg im Bereich vorzugsweise beider Seitenwände zu führen. Demzufolge ist auch wesentlich, dass der Querschnitt der Führungsstange über die gesamte Länge, also auch im Bereich der bogenförmigen Biegung oder Abwinklung, den gleichen aber zumindest keinen größeren Querschnitt aufweist, sodass den einzelnen Balgelementen, die auf der Führungsstange geführt sind, kein oder kein nennenswerter Widerstand bei ihrer Bewegung entgegengesetzt wird. Vorteilhaft ist hierbei die Führungsstange im Querschnitt rund ausgebildet.

Nach einem vorteilhaften Merkmal der Erfindung weisen die Balgelemente jeweils mindestens ein Führungsglied zur Verbindung mit der Führungsstange auf. Das Führungsglied ist hierbei als Öse ausgebildet. Weiterhin vorteilhaft ist jedes Balgelement als Falte ausgebildet, sodass ein Faltenbalg vorliegt, wobei die Falten im Scheitel einer jeden Falte zumindest außen den sogenannten Balg- oder Einfassrahmen aufweisen, der der Erhöhung der Stabilität dient. Für die Ausbildung der Öse kann entweder vorgesehen sein, die Öse in dem Balgrahmen vorzusehen, oder aber an dem Balgrahmen eine Öse zu befestigen. Die zweite Möglichkeit hat den Vorteil, dass der Balgrahmen durch die außen am Balgrahmen angeordnete Öse nicht geschwächt wird. Die Öse weist vorteilhaft ein sich im Einbauzustand in vertikaler Richtung entsprechendes Langloch auf, was die verschiebliche Führung auf der Führungsstange im Bereich des Bogens am vorderen Ende der Führungsstange begünstigt.

Der Balg, der insbesondere als Faltenbalg ausgebildet ist, ist in einer stirnseitigen Ansicht insgesamt U-förmig gestaltet. Das heißt, dass sich der Balg U-förmig über den Boden erstreckt. Zur Führung des Balges ist vorteilhaft im Bodenbereich einer jeden Seitenwand des Balges eine Führungsstange vorgesehen, so wie sie zuvor beschrieben worden ist. Um einen gleichmäßigen Auszug des Balges zu gewährleisten, befindet sich zwischen einem jeden Führungsglied ein Abstandshalter. Hierbei ist der Abstandshalter auf der Führungsstange ebenso wie das Führungsglied längsverschieblich angeordnet.

Anhand der Zeichnungen wird die Erfindung nachstehend beispielhaft näher erläutert.
- Fig. 1: zeigt den Übergang in einer perspektivischen Darstellung;
- Fig. 2: zeigt die Einzelheit X aus Fig. 1 in vergrößerter Darstellung.

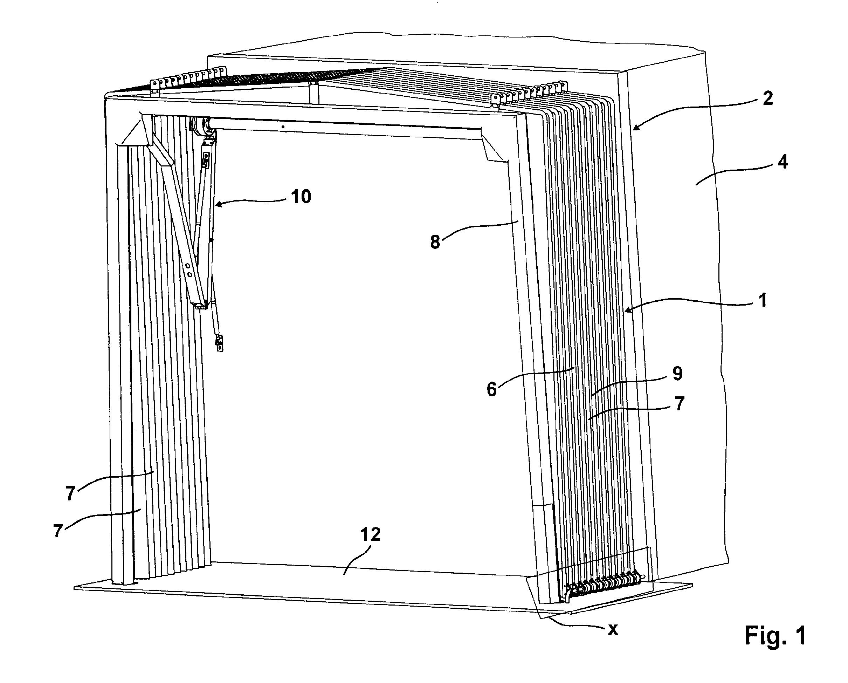

Der insgesamt mit 1 bezeichnete Übergang ist an der Stirnseite 2 der in der Fig. 1 angedeuteten Fluggastbrücke oder -treppe 4 befestigt. Der Übergang 1 umfasst den mit 6 bezeichneten Faltenbalg, der an seinem freien Ende den mit 8 bezeichneten Bumper aufweist. Sowohl der Balg als auch der Bumper sind hierbei in der Ansicht U-förmig ausgebildet. Darüber hinaus ist der mit 10 bezeichnete Ausfahrmechanismus erkennbar, der auf beiden Seiten des Balges vorgesehen ist, mit welchem der Bumper 8, der mit der Stirnseite des Balges fest verbunden ist, entsprechend der Kontur des Flugzeugrumpfes im Bereich des Einstieges des Flugzeuges auf den Flugzeugrumpf aufgelegt wird.

Der Faltenbalg 6 überspannt den insgesamt mit 12 bezeichneten Boden.

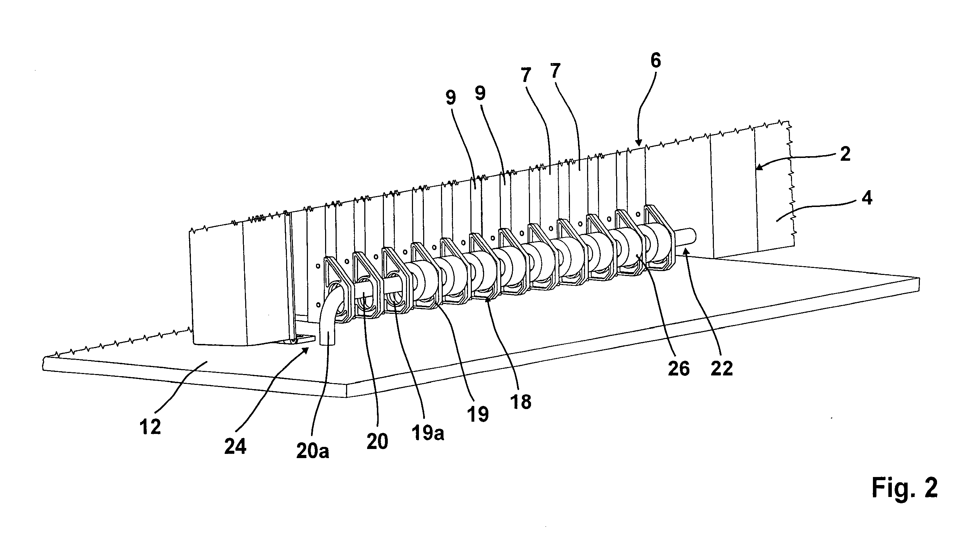

Die Erfindung lässt sich nun der in Fig. 2 dargestellten Einzelheit X aus Fig. 1 entnehmen. Zur Führung des Faltenbalges 6 weisen die einzelnen Einfassrahmen 9 der faltenförmigen Balgelemente 7 des Faltenbalges Ösen 18 auf, die durch die mit 20 bezeichnete Führungsstange aufgenommen werden. Die Führungsstange selbst ist an ihrem einen Ende (Pfeil 22) mit der Stirnseite 2 der Fluggastbrücke oder-treppe 4 verbunden. Am anderen entgegengesetzten Ende (Pfeil 24) ist die Führungsstange 20 im Winkel von etwa 90° in Richtung auf den Boden 12 zu abgebogen. Der Radius der bogenförmigen Biegung beträgt zwischen 20 und 45 mm, vorzugsweise etwa 25 - 35 mm.

Die einzelnen Ösen 18, die mit den Balgrahmen 9 der einzelnen Falten des Faltenbalges 6 verbunden sind, weisen einen Rahmen 19 auf, der eine Öffnung in Form eines sich parallel zu der Höhe der Seitenwand erstreckenden Langloches 19a aufweist. Durch dieses Langloch 19a, in Verbindung mit der bogenförmigen Biegung der Führungsstange am vorderen Ende, wird erreicht, dass bei Ausstellung des Balgdaches durch den Ausfahrmechanismus 10 die einzelnen Ösen 18 bis in den im Einbauzustand vertikalen Bereich 20a der Führungsstange 20 gelangen können, wodurch gewährleistet ist, dass der Balg selbst in diesem Bereich keine Kräfte erfährt, die entweder zur Zerstörung der Ösen 18 oder gar des Balges und hier insbesondere der Balgrahmen führen. Denn insbesondere durch die Ausbildung der Öffnung als Langloch 19a, das sich im Einbauzustand in vertikaler Richtung erstreckt, können die Ösen und damit die Balgelemente der Biegung der Führungsstange im Bereich des Bumpers folgen. Weiterhin ist aus der Fig. 2 erkennbar, dass sich zwischen den einzelnen Ösen 18 Abstandshalter 26 befinden, die rollenförmig ausgebildet sind, und die ebenfalls verschieblich durch die Führungsstange 20 aufgenommen sind.

### Bezugszeichenliste:

- 1: Übergang
- 2: Stirnseite
- 4: Fluggastbrücke oder -treppe
- 6: Faltenbalg
- 7: Balgelement
- 8: Bumper
- 9: Balg- oder Einfassrahmen
- 10: Ausfahrmechanismus
- 12: Boden
- 18: Ösen
- 19: Rahmen
- 19a: Langloch (Öffnung)
- 20: Führungsstange
- 20a: vertikaler Bereich der Führungsstange (im Einbauzustand)
- 22: Pfeil
- 24: Pfeil
- 26: Abstandshalter

## Patentansprüche

1. Fluggastbrücke oder -treppe (4) mit einem stirnseitigen Übergang (1), wobei der Übergang (1) einen Balg mit stirnseitigen Bumper (8) und einen Boden (12) umfasst, wobei der Balg eine Mehrzahl von Balgelementen (7) aufweist, wobei der Übergang im Bereich des Bodens (12) mindestens eine Führungsstange (20) zur längsverschieblichen Führung mehrerer Balgelemente (7) aufweist,
**dadurch gekennzeichnet,**
**dass** die Führungsstange (20) im Bereich des Bumpers (8) bogenförmig in Richtung auf den Boden (12) zu abgewinkelt ist.

2. Fluggastbrücke oder -treppe (4) nach Anspruch 1,
**dadurch gekennzeichnet,**
**dass** die Führungsstange (20) um einen Winkel zwischen 30° und 180°, vorzugsweise um einen Winkel von ca. 90°, abgebogen ist.

3. Fluggastbrücke oder -treppe (4) nach einem der voranstehenden Ansprüche,
**dadurch gekennzeichnet,**
**dass** die Führungsstange (20) im Querschnitt rund ausgebildet ist.

4. Fluggastbrücke oder -treppe (4) nach einem der voranstehenden Ansprüche,
**dadurch gekennzeichnet,**
**dass** an der Fluggastbrücke oder -treppe (4) stirnseitig die Führungsstange (20) fixiert ist.

5. Fluggastbrücke oder -treppe (4) nach einem der voranstehenden Ansprüche,
**dadurch gekennzeichnet,**
**dass** die Führungsstange (20) mit ihrem abgebogenen Ende an dem Boden (12) befestigt ist.

6. Fluggastbrücke oder -treppe (4) nach einem der voranstehenden Ansprüche,
**dadurch gekennzeichnet,**
**dass** mehrere Balgelemente (7) jeweils ein Führungsglied zur Verbindung mit der Führungsstange (20) aufweisen.

7. Fluggastbrücke oder -treppe (4) nach Anspruch 6,
**dadurch gekennzeichnet,**
**dass** das Führungsglied als Öse (18) ausgebildet ist.

8. Fluggastbrücke oder -treppe (4) nach einem der voranstehenden Ansprüche,
**dadurch gekennzeichnet,**
**dass** das Balgelement (7) als Falte ausgebildet ist.

9. Fluggastbrücke oder -treppe (4) nach einem der voranstehenden Ansprüche,
**dadurch gekennzeichnet,**
**dass** das Balgelement (7) einen Einfassrahmen (9) aufweist, an dem die Öse (18) befestigt ist.

10. Fluggastbrücke oder -treppe (4) nach einem der voranstehenden Ansprüche,
**dadurch gekennzeichnet,**
**dass** der Balg (6) U-förmig umlaufend ausgebildet ist.

11. Fluggastbrücke oder -treppe (4) nach Anspruch 10,
**dadurch gekennzeichnet,**
**dass** zu jeder Seite des U-förmig umlaufenden Balges (6) eine Führungsstange (20) vorgesehen ist.

12. Fluggastbrücke oder -treppe (4) nach einem der Ansprüche 6 bis 11,
**dadurch gekennzeichnet,**
**dass** zwischen den einzelnen Führungsgliedern jeweils ein Abstandshalter (26) angeordnet ist.

13. Fluggastbrücke oder -treppe (4) nach Anspruch 12,
**dadurch gekennzeichnet,**
**dass** der Abstandshalter (26) auf der Führungsstange (20) längsverschieblich angeordnet ist.

14. Fluggastbrücke oder -treppe (4) nach einem der Ansprüche 7 bis 13,
**dadurch gekennzeichnet,**
**dass** die Öse (18) ein sich in Richtung der Hochachse des Balges erstreckendes Langloch (19a) aufweist.

## Claims

1. An air passenger boarding bridge or stairs (4) with a frontal gangway (1), wherein the gangway (1) comprises a bellows with a frontal bumper (8) and a floor (12), wherein the bellows has a plurality of bellows elements (7), wherein, in the area of its floor (12), the gangway has at least one guide rod (20) for longitudinally displaceable guiding of several bellows elements (7),
**characterized in that**
in the area of the bumper (8), the guide rod (20) is bent in the shape of an arc in the direction of the floor (12).

2. The air passenger boarding bridge or stairs (4) according to claim 1,
**characterized in that**
the guide rod (20) is bent at an angle between 30° and 180°, preferably at an angle of ca. 90°.

3. The air passenger boarding bridge or stairs (4) according to one of the afore-mentioned claims,
**characterized in that**
the guide rod (20) is designed with a round cross-section.

4. The air passenger boarding bridge or stairs (4) according to one of the afore-mentioned claims,
**characterized in that**
the guide rod (20) is frontally fixed to the air passenger boarding bridge or stairs (4).

5. The air passenger boarding bridge or stairs (4) according to one of the afore-mentioned claims,
**characterized in that**
the guide rod (20) is fastened to the floor (12) with its bent end.

6. The air passenger boarding bridge or stairs (4) according to one of the afore-mentioned claims,
**characterized in that**
several bellows elements (7) have respectively one guide member for connection with the guide rod (20).

7. The air passenger boarding bridge or stairs (4) according to claim 6,
**characterized in that**
the guide member is designed as a grommet (18).

8. The air passenger boarding bridge or stairs (4) according to one of the afore-mentioned claims,
**characterized in that**
the bellows element (7) is designed as a fold.

9. The air passenger boarding bridge or stairs (4) according to one of the afore-mentioned claims,
**characterized in that**
the bellows element (7) has a bordering frame (9) to which the grommets (18) are fastened.

10. The air passenger boarding bridge or stairs (4) according to one of the afore-mentioned claims,
**characterized in that**
the bellows (6) is designed so that it is circumferentially U-shaped.

11. The air passenger boarding bridge or stairs (4) according to claim 10,
**characterized in that**
a guide rod (20) is provided on each side of the U-shaped circumferential bellows (6).

12. The air passenger boarding bridge or stairs (4) according to one of the claims 6 to 11,
**characterized in that**
respectively one spacer (26) is disposed between the individual guide members.

13. The air passenger boarding bridge or stairs (4) according claim 12,
**characterized in that**
the spacer (26) is disposed on the guide rod (20) so that it is longitudinally displaceable.

14. The air passenger boarding bridge or stairs (4) according one of the claims 7 to 13,
**characterized in that**
the grommet (18) has a long hole (19a) extending in the direction of the vertical axis of the bellows.

## Revendications

1. Passerelle ou escalier d'embarquement (4) avec un passage frontal (1), où le passage (1) comprend un soufflet avec un bourrelet frontal (8) et un sol (12), où le soufflet comporte une pluralité d'éléments de soufflet (7), où le passage comporte, dans la région du sol (12), au moins une barre de guidage (20) guider plusieurs éléments de soufflet (7) de manière longitudinalement déplaçable,
**caractérisé en ce que**
dans la région du bourrelet (8), la barre de guidage (20) est recourbée en arc dans la direction du sol (12).

2. Passerelle ou escalier d'embarquement (4) selon la revendication 1,
**caractérisé en ce que**
la barre de guidage (20) est recourbée selon un angle de 30° à 180°, de préférence selon un angle d'environ 90°.

3. Passerelle ou escalier d'embarquement (4) selon l'une quelconque des revendications précédentes,
**caractérisé en ce que**
la barre de guidage (20) a une section transversale ronde.

4. Passerelle ou escalier d'embarquement (4) selon l'une quelconque des revendications précédentes,
**caractérisé en ce que**
la barre de guidage (20) est fixée frontalement à la passerelle ou à l'escalier d'embarquement (4).

5. Passerelle ou escalier d'embarquement (4) selon l'une quelconque des revendications précédentes,
**caractérisé en ce que**
la barre de guidage (20) est fixée au sol (12) avec son extrémité recourbée.

6. Passerelle ou escalier d'embarquement (4) selon l'une quelconque des revendications précédentes,
**caractérisé en ce que**
plusieurs éléments de soufflet (7) comportent respectivement un organe de guidage pour être connectés à la barre de guidage (20).

7. Passerelle ou escalier d'embarquement (4) selon la revendication 6,
**caractérisé en ce que**
l'organe de guidage est réalisé en forme d'oeillet (18).

8. Passerelle ou escalier d'embarquement (4) selon l'une quelconque des revendications précédentes,
**caractérisé en ce que**
l'élément de soufflet (7) est réalisé en forme de pli.

9. Passerelle ou escalier d'embarquement (4) selon l'une quelconque des revendications précédentes,
**caractérisé en ce que**
l'élément de soufflet (7) comporte un cadre d'enchâssement (9) auquel est fixé l'oeillet (18).

10. Passerelle ou escalier d'embarquement (4) selon l'une quelconque des revendications précédentes,
**caractérisé en ce que**
le soufflet (6) est réalisé périphériquement en forme de U.

11. Passerelle ou escalier d'embarquement (4) selon la revendication 10,
**caractérisé en ce que**
une barre de guidage (20) est prévue de chaque côté du soufflet (6) périphérique en U.

12. Passerelle ou escalier d'embarquement (4) selon l'une des revendications 6 à 11,
**caractérisé en ce que**
respectivement un espaceur (26) est disposé entre les organes de guidage individuels.

13. Passerelle ou escalier d'embarquement (4) selon la revendication 12,
**caractérisé en ce que**
l'espaceur (26) est disposé sur la barre de guidage (20) de manière longitudinalement déplaçable.

14. Passerelle ou escalier d'embarquement (4) selon l'une des revendications 7 à 13,
**caractérisé en ce que**
l'oeillet (18) comporte un trou oblong (19a) s'étendant dans la direction de l'axe vertical du soufflet.
